# EUROPÄISCHE PATENTSCHRIFT

(11) **EP 1 571 083 B1**
(45) Veröffentlichungstag und Bekanntmachung des Hinweises auf die Patenterteilung: **27.12.2006**
(21) Anmeldenummer: 04004825.8
(22) Anmeldetag: 02.03.2004
(51) Int. Cl.: B64F 1/32, B66F 7/08

(54) **Hubvorrichtung mit Leiter und deren Verwendung**
Lifting device with a ladder and its use
Dispositif de levage avec une échelle et son utilisation

(43) Veröffentlichungstag der Anmeldung: 07.09.2005
(73) Patentinhaber: Trepel Airport Equipment GmbH, 97941 Tauberbischofsheim (DE)
(72) Erfinder: Veit, Janik, 97950 Grossrinderfeld (DE)
(74) Vertreter: Quermann, Helmut

(56) Entgegenhaltungen:
- DE-A1- 10 133 817
- GB-A- 726 658
- GB-A- 755 214
- US-A- 3 000 473
- US-A- 3 664 458
- US-A- 3 889 778
- US-A- 5 129 776

## Beschreibung

Die Erfindung betrifft eine Hubvorrichtung gemäß dem Oberbegriff des Patentanspruchs 1, sowie die Verwendung einer solchen Hubvorrichtung.

Aus der DE 101 33 817 A1 ist eine Hubvorrichtung bekannt, mit einem unteren Rahmen, einem oberen Rahmen zur Aufnahme einer Last, wobei dem oberen Rahmen ein Scherenpaar zugeordnet ist, das im unteren Rahmen gelagert ist und den oberen Rahmen aufnimmt, sowie die beiden Scheren des Scherenpaares beidseitig des unteren und oberen Rahmens angeordnet sind und die jeweilige Schere als Mehrfachschere ausgebildet ist, sowie Mittel zum Heben und Senken des oberen Rahmens vorgesehen sind.

Diese Hubvorrichtung ist wesentlicher Bestandteil einer fahrbaren Flugzeugbeladevorrichtung, bei der die jeweilige Schere als Doppelschere ausgebildet ist. Mit solchen Doppel- bzw., allgemeiner bezeichnet, Mehrfachscheren können große Hubhöhen bewerkstelligt werden, wie sie beispielsweise für besonders große Flugzeuge mit entsprechend hoch liegender Beladeebene erforderlich sind. Bei solchen Flugzeugen befindet sich das Beladeniveau durchaus 8 Meter oder mehr oberhalb der Fahrfläche des Flugzeuges bzw. der fahrbaren Flugzeugbeladevorrichtung.

Bei der aus dieser Schrift bekannten Hubvorrichtung kommt dem Scherenpaar tragende Bedeutung zu. Es dient der Aufnahme einer Last auf dem oberen Rahmen. Bei einer Last handelt es sich beispielsweise um ein zu be- bzw. entladendes Gut oder aber um Personen, die auf das Zugangsniveau des Flugzeuges verbracht oder vom Flugzeug auf die Hubvorrichtung übernommen werden sollen. Demzufolge kann dem oberen Rahmen eine Plattform zur Aufnahme einer Last zugeordnet sein oder aber eine Kabine, in der sich die Personen aufhalten können. Die angesprochenen fahrbaren Flugzeugbeladevorrichtungen sind insbesondere mit einer Arbeitsplattform versehen oder als Servicefahrzeuge oder Fahrzeuge mit heb- und senkbarer Personenkabine ausgebildet.

Bei Hubvorrichtungen, mit denen große Hubhöhen bewerkstelligt werden sollen, kann es durchaus erforderlich sein, den oberen Rahmen in teilweise oder ganz angehobenem Zustand besteigen zu können. In diesem Zusammenhang ist es aus der Praxis bekannt, eine Bestandteil der Hubvorrichtung bildende Leiter zu verwenden.

So ist aus der Praxis eine Hubvorrichtung gemäß dem Oberbegriff des Patentanspruchs 1 bekannt. Sie weist ein Scherenpaar auf, wobei die jeweilige Schere als Doppelschere ausgebildet ist. Die Leiter ist 3-teilig ausgebildet. Die 3 Leiterteile sind teleskopierbar und das erste Leiterteil bzw. das zweite Leiterteil in Linearführungen des dritten, mittleren Leiterteils geführt. In der abgesenkten und der angehobenen Stellung des oberen Rahmens wird das dritte Leiterteil mit dem ersten Leiterteil und dem zweiten Leiterteil rastiert.

Nachteilig ist bei einer solchen Leiteranordnung, dass eine Verriegelung der Leiterteile erforderlich ist und überdies, aufgrund der Relativbewegung der beiden Rahmen infolge des zwischen diesen angeordneten Scherenpaares ein Verkanten der Leiterteile nicht ausgeschlossen werden kann. Hierdurch ist die Funktion der Leiter eingeschränkt, ferner treten wegen der Verkantung der Leiterteile in kurzer Zeit Schäden an der Leiter auf.

Bei der teleskopierbaren Ausbildung der Leiter besteht zudem die Gefahr, dass das dritte Leiterteil verklemmt. Steigt jemand die Leiter herab, rutscht das dritte Leiterteil unter Umständen nach unten, womit die Person einer erheblichen Unfallgefährdung unterliegt.

Eine Hubvorrichtung mit den Merkmalen des Oberbegriffs des Patentanspruchs 1 ist ferner aus der US-A-3 889 778 bekannt. Sie weist die Merkmale der vorstehend aus der Praxis bekannten Hubvorrichtung und somit auch deren Nachteile auf.

In der GB-A-726 658 sind Hubvorrichtungen beschrieben, bei denen mehrere Leiterteile im Bereich deren Enden gelenkig miteinander verbunden sind bzw. das oberste und unterste Leiterteil gelenkig im oberen bzw. unteren Rahmen gelagert ist. In der vollständig angehobenen Stellung des oberen Rahmens sind die Leiterteile gestreckt und vertikal platziert, während sie in der vollständig oder teilweise abgesenkten Stellung des oberen Rahmens in eine schräge Stellung überführt werden und bei vollständig abgesenktem oberen Rahmen nahezu horizontal angeordnet sind.

Aus der Praxis ist eine Flugzeugbeladevorrichtung mit Doppelschere und Leiter, die zwei Leiterteile aufweist, bekannt. Das erste Leiterteil ist im unteren Rahmen gelagert und das zweite Leiterteil im oberen Rahmen gelagert. Das erste Leiterteil ist im größeren Abstand zur der der Leiter zugeordneten Schere angeordnet als das zweite Leiterteil. Bei vollständig angehobenem oberen Rahmen überlappen sich die Leiterteile geringfügig. Bei vollständig abgesenktem oberem Rahmen überlappen sich die beiden Leiterteile nahezu vollständig, wobei das erste Leiterteil über den oberen Rahmen hinaus steht.

Nachteilig ist bei dieser Hubvorrichtung, dass nur relativ geringe Hubhöhen des oberen Rahmens mit der Leiter überbrückt werden können und überdies die Leiter über das Niveau des oberen Rahmens und damit das Niveau einer auf dieser ruhenden Ladeplattform übersteht. Die Folge ist, dass auf dieser Plattform nur in eingeschränktem Umfang gearbeitet werden kann, weil die überstehende Leiter im Weg ist.

Aufgabe der Erfindung ist es, eine Hubvorrichtung so auszubilden, dass mit dieser ein sicheres Besteigen der Hubvorrichtung bei technisch einwandfreier Funktion der Leiter gewährleistet ist.

Gelöst wird die Aufgabe durch eine Hubvorrichtung mit den Merkmalen des Patentanspruchs 1.

Erfindungsgemäß ist somit vorgesehen, dass das dritte Leiterteil in der der Leiter benachbarten Schere gelagert ist. Dies ermöglicht es, das dritte Leiterteil unabhängig vom ersten und vom zweiten Leiterteil zu verfahren. Sind mehrere dritte Leiterteile vorgesehen, können diese, aufgrund ihrer von einander unabhängigen Lagerung in der genannten Schere unabhängig voneinander verfahren werden. Dadurch können große Hubhöhen überbrückt werden, ohne die Funktionalität der Leiter zu beeinträchtigen, beispielsweise, wie beim Stand der Technik, durch teleskopierbare Leiterteile.

Die Lagerung des dritten Leiterteils bzw. der dritten Leiterteile in der Schere hat den Vorteil, dass das jeweilige dritte Leiterteil beim Aus- bzw. Einfahren der Schere sich mit nach oben bzw. nach unten bewegt und damit den Abstand zu den benachbarten Leiterteilen überbrückt. Bei einem einzigen dritten Leiterteil wäre dies der Abstand zum ersten und zum zweiten Leiterteil, bei mehreren dritten Leiterteilen ggf. der Abstand zwischen benachbarten dritten Leiterteilen. Bei abgesenktem oberen Rahmen sind die ersten, zweiten und dritten Leiterteile in einer sich maximal überlappenden Anordnung, während bei vollständig angehobenem oberen Rahmen diese Leiterteile sich entweder noch geringfügig überlappen, oder, und dies wird als bevorzugt angesehen, nicht mehr überlappen.

Das dritte Lagerteil ist insbesondere in einem Trägerteil gehalten. Diese Anordnung berücksichtigt den Umstand, dass das dritte Lagerteil in der Schere gelagert ist, die sich beim Heben und Senken des oberen Rahmens in ihrer Form sowohl vertikal als auch horizontal verändert. Unter diesem Aspekt weisen die beiden Rahmen Los- und Festlager für die beiden Scheren auf. Demzufolge ist es vorteilhaft, das Trägerteil, das das dritte Lagerteil aufnimmt, im Bereich eines Endes in ausschließlich vertikal verfahrbaren Verbindungslager der benachbarten Einzelscheren der jeweiligen Schere und im Bereich des anderen Endes im vertikal und horizontal verfahrbaren Verbindungslager dieser benachbarten Einzelscheren zu lagern.

Ist die jeweilige Schere beispielsweise als Doppelschere ausgebildet, reicht es aus, ein drittes Leiterteil vorzusehen. Dieses ist vorzugsweise im Bereich der Verbindungslager der beiden Einzelscheren gelagert. Die Abmessungen der jeweiligen Einzelscheren sollten so bemessen sein, dass, bei einem Hub des oberen Rahmens um die Strecke X, sich die Position der Verbindungslager der benachbarten Einzelscheren und damit die Position des in diesen gehaltenen Trägerteils, sowie ferner die Position des im Trägerteil gehaltenen dritten Leiterteils um die Strecke ½ X, somit den halben Hub des oberen Rahmens verlagert. In der Konsequenz fährt das mit dem oberen Rahmen verbundene zweite Leiterteil mit der doppelten Geschwindigkeit und doppelten Strecke nach oben aus als das dritte Leiterteil. Entsprechendes gilt beim Absenken des oberen Rahmens. Besonders einfach lässt sich diese Anforderung erfüllen, wen die jeweiligen Einzelscheren der Mehrfachschere gleich sind. Unter gleich wird hiermit das Erreichen der selben Kinematik verstanden, bauliche Abweichungen der jeweiligen Einzelscheren sind selbstverständlich möglich.

Das dritte Leiterteil ist vorzugsweise, in vertikaler Flucht gesehen, zwischen dem ersten und dem zweiten Leiterteil angeordnet, wobei das erste Leiterteil in größerem Abstand zu der der Leiter zugeordneten Schere angeordnet sein sollte als das zweite Leiterteil. Beim Hinaufsteigen auf die Leiter betritt die Person somit zunächst das vorn liegende erste Leiterteil, anschließend das dahinter liegende dritte Leiterteil und schließlich das hinter diesem liegende zweite Leiterteil.

Die erfindungsgemäße Hubvorrichtung findet insbesondere bei einem Fahrzeug für die Flugzeugbe- und/oder -entladung Verwendung. Insofern ist der untere Rahmen mit einem Fahrwerk, insbesondere einem lenkbaren Fahrwerk versehen. Die Räder der Hubvorrichtung sind insbesondere maschinell antreibbar. Insofern ist das Fahrzeug vorzugsweise als Kraftfahrzeug ausgebildet. Der obere Rahmen nimmt insbesondere eine Plattform oder eine Kabine zur Aufnahme einer Last auf. Bei dieser Last kann es sich um zu be- bzw. entladendes Gut oder um Personen handeln.

Weitere Merkmale der Erfindung sind in den Unteransprüchen, der Beschreibung der Figuren und den Figuren selbst dargestellt, wobei bemerkt wird, dass alle Einzelmerkmale und alle Kombinationen von Einzelmerkmalen weitere erfinderische Ausgestaltungen darstellen.

In den Figuren ist die Erfindung anhand eines Ausführungsbeispiels erläutert, ohne hierauf beschränkt zu sein.

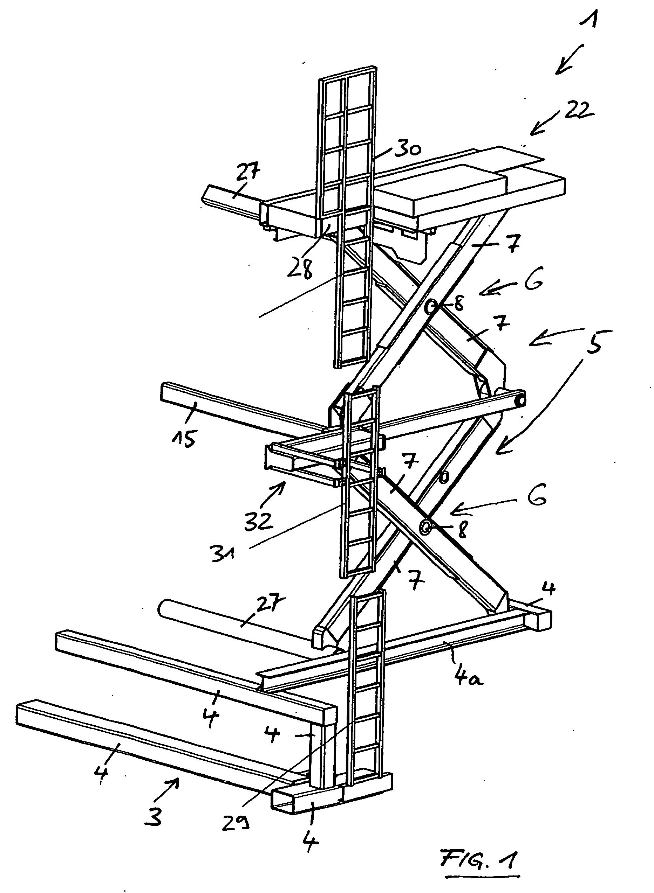

Es zeigt
- Fig. 1: den für die vorliegende Erfindung interessanten Bereich einer in räumlicher Ansicht dargestellten Hubvorrichtung, veranschaulicht bei vollständig angehobenem oberen Rahmen;

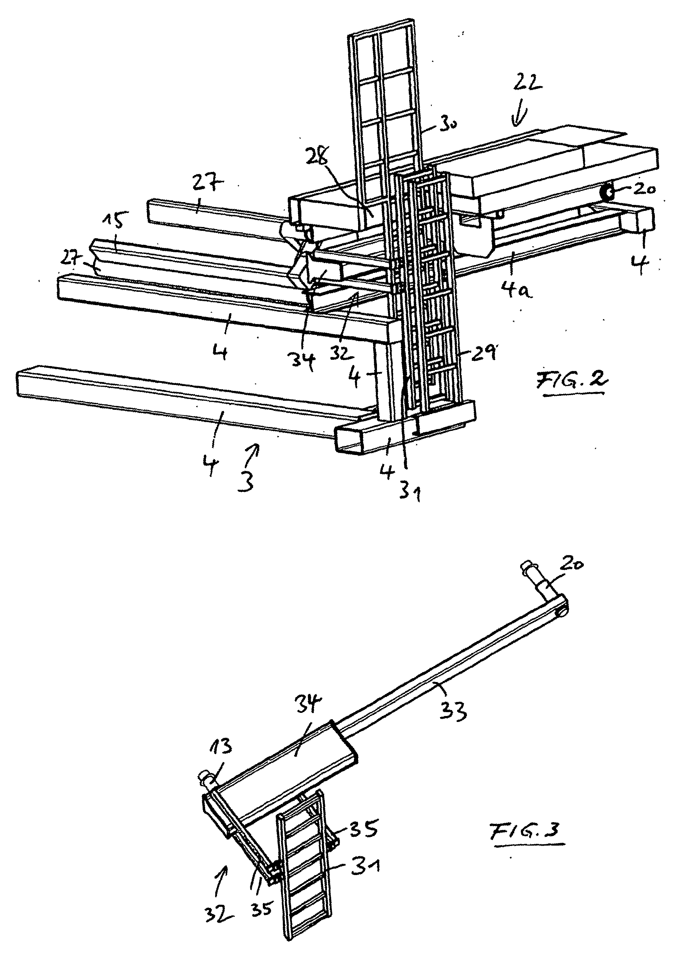

- Fig. 2: den in Fig. 1 gezeigten Bereich der Hubvorrichtung, veranschaulicht bei vollständig abgesenktem oberen Rahmen;
- Fig. 3: eine räumliche Ansicht von drittem Leiterteil und der Aufnahme dieses Leiterteils dienendem Trägerteil, schräg von vorne gesehen;

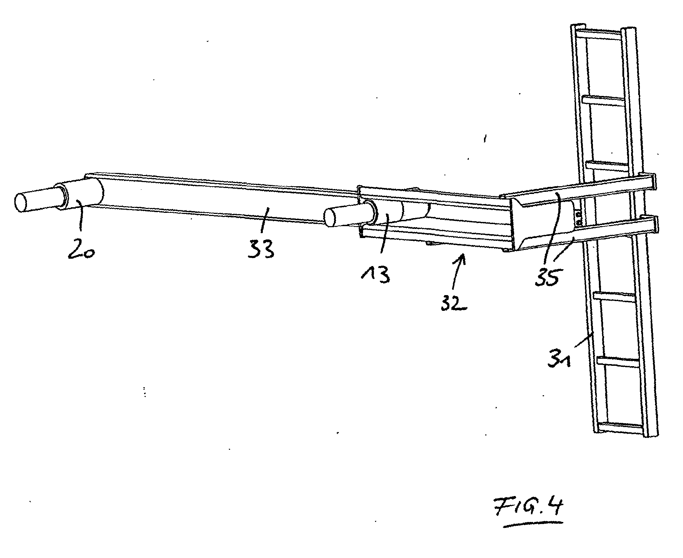

- Fig. 4: eine Ansicht der in Fig. 3 gezeigten Teile, schräg von hinten gesehen;

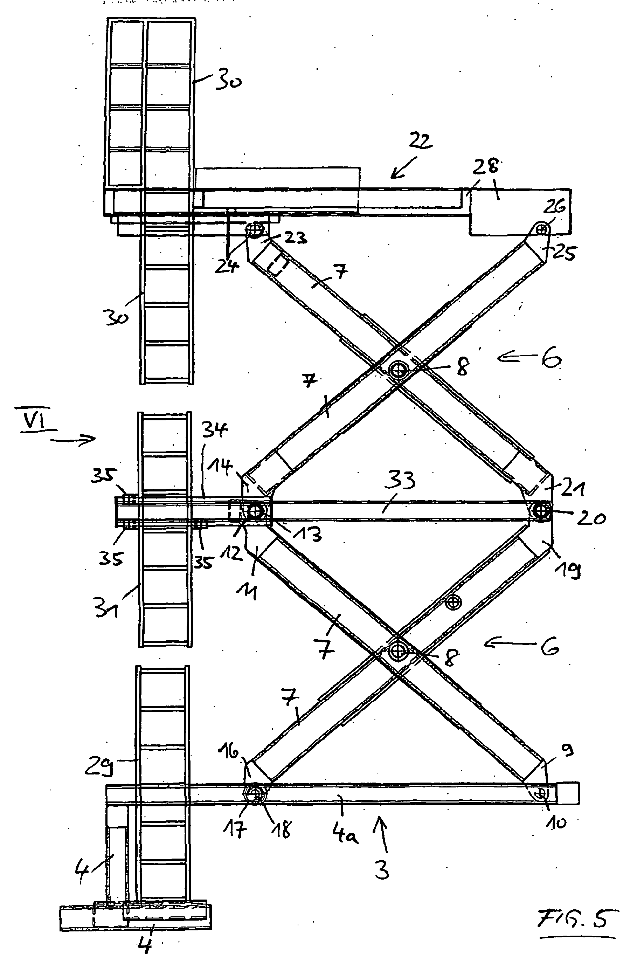

- Fig. 5: eine Ansicht der Hubvorrichtung nach Fig. 1 in Richtung des Pfeiles V in Fig. 6 gesehen;
- Fig. 6: eine Ansicht des in Fig. 5 gezeigten Bereichs der Hubvorrichtung, in Richtung des Pfeils VI in Fig. 5 gesehen;

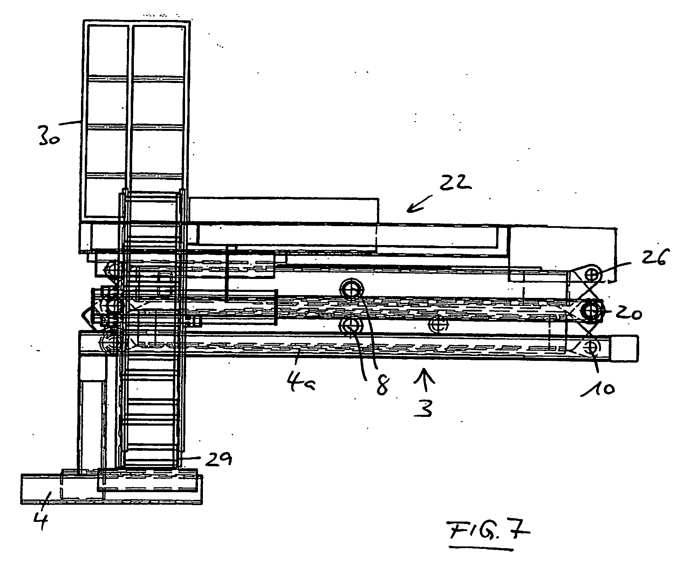

- Fig. 7: eine Ansicht des Bereichs der Hubvorrichtung gem. Fig. 2, in einer Richtung wie zur Fig. 5 veranschaulicht, gesehen.

In den Figuren sind Mittel zum Heben und Senken des oberen Rahmens nicht näher veranschaulicht. Diese greifen in bekannter Art und Weise beispielsweise zwischen dem unteren Rahmen 3 und der unteren Einzelschere 6 und/oder dem oberen Rahmen 22 und der oberen Einzelschere 6 an oder aber es sind die Kraftmittel unmittelbar zwischen den Scherenhebeln 7 der jeweiligen Einzelschere 6 wirksam, indem sie in bekannter Art und Weise auf die den Scheren zugeordneten, deren Scherenhebel horizontal verbindende Joche einwirken. Bei den Mitteln zum Heben und Senken des oberen Rahmens handelt es sich insbesondere um Hydraulikzylinder, die beim Ausfahren der Kolbenstange den oberen Rahmen anheben und die beim Senken des oberen Rahmens entgegen dessen Gewichtskraft ggf. einschließlich des Gewichtes das auf dem oberen Rahmen ruht, wirken.

Die erfindungsgemäße Hubvorrichtung 1 bildet insbesondere Bestandteil eines Fahrzeugs für die Flugzeugbe- und/oder -entladung.

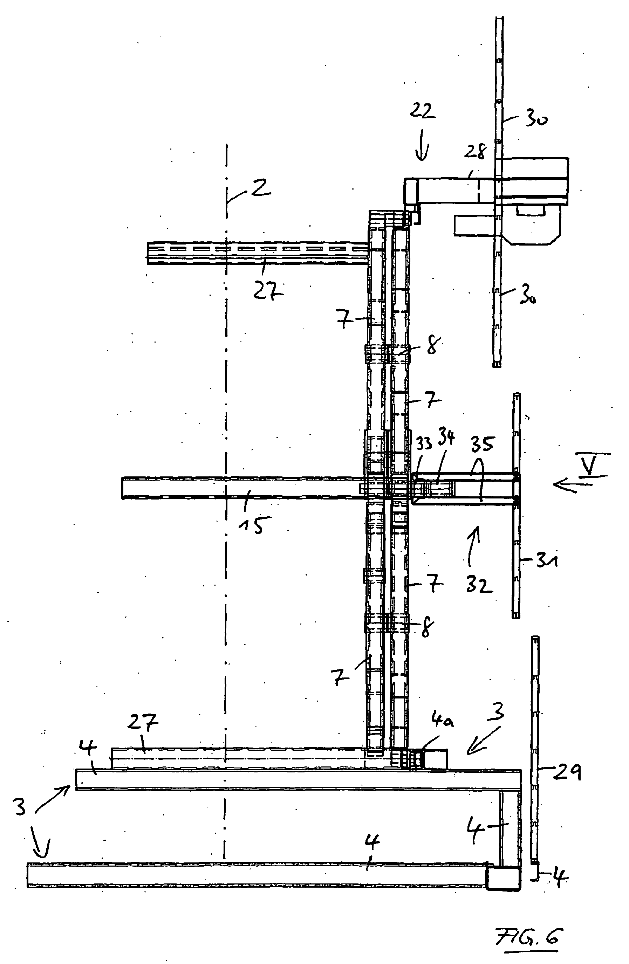

Gezeigt ist nur derjenige Bereich der Vorrichtung, der für die Lagerung und Anbringung der Leiter relevant ist. Veranschaulicht ist somit nur die eine Hälfte der Vorrichtung, die sich besonders anschaulich aus der Darstellung der Fig. 6 ergibt. Die andere Hälfte der Hubvorrichtung ist spiegelsymmetrisch, beispielsweise zur Linie 2, ausgebildet, wobei auf der anderen Seite keine Leiter vorhanden ist.

Die Hubvorrichtung 1 weist einen unteren Rahmen 3 auf, der aus diversen sich horizontal und vertikal erstreckenden Profilen 4 zusammengeschweißt ist. Hierbei bildet Bestandteil des unteren Rahmens 3 auch ein als Doppel-T-Träger ausgebildetes Profil 4a. Das auf der jeweiligen Seite der Hubvorrichtung angeordnete Profil 4a, also die beiden parallel zueinander angeordneten Profile 4a, dienen der Lagerung eines Scherenpaares.

Da nur die eine Hälfte der Hubvorrichtung gezeigt ist, ist nur eine Schere 5 des Scherenpaares veranschaulicht. Die beiden Scheren sind vertikal orientiert und verlaufen demzufolge parallel zueinander. Die Scheren 5 sind in geringem Abstand zu den Profilen 4a positioniert.

Jede Schere 5 ist als Doppelschere ausgebildet. Die jeweilige Einzelschere 6 weist zwei Scherenhebeln 7 auf, die im Bereich des Drehpunkts der Scherenhebel 7 mittels eines Lagerbolzens 8 verbunden sind.

Ein Scherenhebel 7 der unteren Einzelschere 6 ist im Bereich seines unteren Endes 9 mittels eines Lagerbolzens 10 schwenkbar im Profil 4a gelagert. Dort ist das Festlager der unteren Einzelschere 6 in deren unterem Bereich gebildet. Dieser Scherenhebel 7 nimmt im Bereich seines oberen Endes 11 eine Rolle 12 um eine horizontale Achse drehbar auf, die nach außen gerichtet ist. Der Lagerbolzen 13 für diese Rolle 12 dient der Lagerung dieses Scherenhebels 7 im Bereich seines Endes 11 und des zugewandten Scherenhebels 7 der oberen Einzelschere 6 im Bereich deren Endes 14. Der Lagerbolzen 13 ist mit einem Joch 15 verbunden, das mit dem entsprechenden Lagerbolzen der anderen Schere 5 auf der anderen Seite der Hubvorrichtung 1 verbunden ist.

Die andere Schere 7 der unteren Einzelschere 6 nimmt im Bereich ihres unteren Endes 16 eine Rolle 17 drehbar auf. Gelagert ist die Rolle 17 in einem Lagerbolzen 18, der mit dem Ende 16 verbunden ist. Die Rolle 17 greift in das U-förmige Profil auf der einen Seite des Doppel-T-Trägers 4a ein. Die Rolle 17 stellt damit bezüglich der unteren Einzelschere 6 das untere Loslager dar, indem die Rolle 17 sich relativ zum Profil 4a bewegen kann. Das obere Ende 19 dieses Scherenhebels 7 nimmt einen Lagerbolzen 20 auf, der gleichfalls der Lagerung des unteren Endes 21 des anderen Scherenhebels 7 der oberen Einzelschere 6 dient. Das obere Ende dieses Scherenhebels 7 stellt, entsprechend der Anordnung des Loslagers im Bereich der Rolle 17 das Loslager für den oberen Rahmen 22 dar, entsprechend nimmt das obere Ende 23 dieses Scherenhebels 7 eine Rolle 24 auf, die sich an der Unterseite des oberen Rahmens 22 abstützt. Das obere Ende 25 des Scherenhebels 7 der oberen Einzelschere 6 nimmt einen Lagerbolzen 26 auf, der im oberen Rahmen 22 schwenkbar gelagert ist. Dieser Lagerbolzen 26 bildet somit das Festlager im Bereich des oberen Rahmens 22, das entsprechend dem Festlager im Bereich des Lagerbolzens 10, der dem unteren Rahmen 3 zugeordnet ist, ausgebildet ist.

Die jeweiligen Enden 16 bzw. 23 der Loslager der beiden Scheren 5 sind miteinander mittels parallel angeordneter Joche 27 verbunden, um das Scherenpaar zu versteifen.

Der obere Rahmen 22 ist aus einer Vielzahl von Trägern 28 zusammen geschweißt, entsprechend den Anforderungen, die an den oberen Rahmen 22 zwecks Lastaufnahme gestellt werden. Der Aufbau des oberen Rahmens 22 ist entsprechend den Erfordernissen zu gestalten, beispielsweise als ebene Plattform zur Aufnahme einer Last oder aber als Kabine für den Catering-Service bzw. für Personen, wobei die Kabine die Passagierkabine des Fahrzeugs darstellt.

Hauptsächlicher Anwendungsfall der vorliegenden Erfindung wird die Gestaltung des oberen Rahmens 22 mit einer Plattform zur Aufnahme von Last sein. Insbesondere in diesem Fall ist es erforderlich, dass auf der Plattform Arbeitende über eine Leiter sowohl bei angehobenem als auch bei abgesenktem oberen Rahmen 22 die Hubvorrichtung 1 besteigen bzw. von dieser herunter steigen können.

Mit dem unteren Rahmen 3 ist im Bereich der den Festenden der Schere 5 abgewandten Hälfte der Hubvorrichtung 1 ein unteres, vertikal orientiertes Leiterteil 29 im Bereich der Außenseite des Trägers 4a angeordnet. Das untere Ende des unteren Leiterteils 29 ist mit einem der Träger 4 verbunden, insbesondere verschweißt. Dieses untere Leiterteil 29 ist somit fest mit dem unteren Rahmen 3 verbunden. Das untere Leiterteil 29 stellt das erste Leiterteil einer dreiteiligen Leiter dar.

Ein oberes vertikal orientiertes Leiterteil 30 - zweites Leiterteil - ist fest mit dem oberen Rahmen 22 verbunden. Dieses Leiterteil ist insbesondere mit dem oberen Rahmen 22 im Bereich eines Trägers 28 verschweißt. Das obere Leiterteil 30 steht über den oberen Rahmen 22 hinaus und ragt vom oberen Rahmen 22 nach unten.

Zwischen den beiden Leiterteilen 29 und 30 ist ein mittleres, vertikal orientiertes Leiterteil 31 - drittes Leiterteil - positioniert. Das mittlere Leiterteil 31 ist, in vertikaler Flucht gesehen, zwischen dem unteren Leiterteil 29 und dem oberen Leiterteil 30 angeordnet und es ist zudem das untere Leiterteil 29 in größerem Abstand zu der der Leiter zugeordneten Schere angeordnet als das obere Leiterteil 30. Beim Absenken des oberen Rahmens 22 ist das mittlere Leiterteil 31 somit zwischen dem unteren Leiterteil 29 und dem oberen Leiterteil 30 positioniert.

Die Länge der einzelnen Leiterteile ist so bemessen, dass benachbarte Leiterteile sich bei vollständig angehobenem oberen Rahmen 22 nicht überlappen, der Abstand benachbarter Leiterteile bevorzugt einem Sprossenabstand der Leiter entspricht.

Das mittlere Lagerteil 31 ist in der der Leiter benachbarten Doppelschere 5 gelagert. Es ist in einem Trägerteil 32 gelagert, das eine U-förmige Schiene 33, eine dieser verbundene Tragplatte 34 und drei Distanzstäbe 35 aufweist. Die Distanzstäbe 35 sind parallel zueinander angeordnet und es ist das mittlere Leiterteil 31 etwa auf halber Länge mit den Distanzstäben 35 in deren Endbereichen verbunden. Das mittlere Leiterteil 31 bildet somit mit dem Trägerteil 32 eine Baueinheit. Gelagert ist das Trägerteil 32 in der Schere 5 im Bereich der Lagerbolzen 13 und 20, die die beiden Einzelscheren 6 verbinden. Der Lagerbolzen 20 durchsetzt das dem mittleren Leiterteil 31 entfernte Ende der U-Schiene 33 und ist mit dieser schwenkbar verbunden, womit, bezogen auf die horizontale Verlagerung der Schere 5 beim Heben und Senken des oberen Rahmens 22 dieses Ende der Schiene 33 mit dem Festlager der Schere 5 zusammen wirkt. Das andere Ende der Schiene 33 wirkt mit dem horizontalen Loslager 13 zusammen, wobei die Rolle 12 in Längsrichtung der U-Schiene 33 geführt ist. Bei angehobener Position des oberen Rahmens 22 kragt der Träger 28 für das mittlere Leiterteil 31 frei aus dem Bereich der Schere 5 heraus, während bei vollständig abgesenktem oberen Rahmen 22 das horizontale Loslager 13 im Bereich des mittleren Leiterteils 31 bzw. im Bereich der Leiter insgesamt positioniert ist.

Die jeweiligen Einzelscheren 6 sind gleich ausgebildet. Dies ist dahingehend zu verstehen, dass beim Heben bzw. Senken des oberen Rahmens 22 das Trägerteil 22 und damit das mittlere Leiterteil 31 um die halbe Strecke bzw. mit der halben Geschwindigkeit bewegt wird, wie der obere Rahmen 22 bzw. das mit diesem verbundene obere Leiterteil 30. Die Loslager der Doppelschere 5 sind dabei in vertikaler Flucht übereinander angeordnet.

## Patentansprüche

1. Hubvorrichtung (1) mit einem unteren Rahmen (3), einem oberen Rahmen (22) zur Aufnahme einer Last, wobei dem oberen Rahmen (22) ein Scherenpaar (5, 5) zugeordnet ist, das im unteren Rahmen (3) gelagert ist und den oberen Rahmen (22) aufnimmt, sowie die beiden Scheren (5, 5) des Scherenpaares beidseitig des unteren (3) und oberen (22) Rahmens angeordnet sind und die jeweilige Schere (5) als Mehrfachschere ausgebildet ist, sowie mit Mitteln zum Heben und Senken des oberen Rahmens (22), wobei im Bereich einer Schere (5) eine Leiter (29, 30, 31) angeordnet ist, mit einem ersten, unabhängig von der Hubhöhe vertikal angeordneten Leiterteil (29), das im unteren Rahmen (3) gelagert ist und einem zweiten, unabhängig von der Hubhöhe vertikal angeordneten Leiterteil (30), das im oberen Rahmen (22), gelagert ist, sowie mindestens einem dritten, unabhängig von der Hubhöhe vertikal angeordneten Leiterteil (31), das zwischen dem ersten (29) und zweiten (30) Leiterteil angeordnet ist, **dadurch gekennzeichnet, dass** das dritte Leiterteil (31) in der der Leiter (29, 30, 31) benachbarten Schere (5) gelagert ist.

2. Vorrichtung nach Anspruch 1, **dadurch gekennzeichnet, dass** die jeweilige Schere (5) als Doppelschere ausgebildet ist.

3. Vorrichtung nach Anspruch 1 oder 2, **dadurch gekennzeichnet, dass** ein einziges drittes Leiterteil (31) vorgesehen ist.

4. Vorrichtung nach einem der Ansprüche 1 bis 3, **dadurch gekennzeichnet, dass** das dritte Leiterteil (31) in einem Trägerteil (32) gehalten ist, das im Bereich eines Endes im ausschließlich vertikal verfahrbaren Verbindungslager (20) der benachbarten Einzelscheren (6, 6) und im Bereich des anderen Endes im vertikal und horizontal verfahrbaren Verbindungslager (13) dieser benachbarten Einzelscheren (6, 6) gelagert ist.

5. Vorrichtung nach einem der Ansprüche 1 bis 4, **dadurch gekennzeichnet, dass** die jeweiligen Einzelscheren (6, 6) der Mehrfachschere gleich sind.

6. Vorrichtung nach einem der Ansprüche 1 bis 5, **dadurch gekennzeichnet, dass** das eine Lager (20) des Trägerteils (32) des dritten Leiterteils (31) in vertikaler Flucht des Festlagers (10, 26) von unterem (3) und oberem (22) Rahmen und das andere Lager (13) des Trägerteils (32) des dritten Leiterteils (31) in vertikaler Flucht des Loslagers (17, 24) von unterem (3) und oberem (22) Rahmen angeordnet ist.

7. Vorrichtung nach einem der Ansprüche 1 bis 6, **dadurch gekennzeichnet, dass** das dritte Leiterteil (31), in vertikaler Flucht gesehen,zwischen dem ersten (29) und dem zweiten (30) Leiterteil angeordnet ist.

8. Vorrichtung nach Anspruch 7, **dadurch gekennzeichnet, dass** das erste Leiterteil (29) in größerem Abstand zu der der Leiter (29, 30, 31) zugeordneten Schere (5) angeordnet ist als das zweite Leiterteil (30).

9. Vorrichtung nach einem der Ansprüche 1 bis 8, **dadurch gekennzeichnet, dass** sich die Leiterteile (29, 30, 31) in vollständig angehobener Stellung des oberen Rahmens (22) nicht überlappen.

10. Vorrichtung nach einem der Ansprüche 1 bis 9, **dadurch gekennzeichnet, dass** der untere Rahmen (3) ein Fahrwerk, insbesondere ein lenkbares, maschinell antreibbares Fahrwerk aufnimmt.

11. Vorrichtung nach einem der Ansprüche 1 bis 10 **dadurch gekennzeichnet, dass** der obere Rahmen (22) eine Plattform oder eine Kabine zur Aufnahme einer Last aufnimmt.

12. Verwendung einer Hubvorrichtung nach einem oder mehreren der Ansprüche 1 bis 11 bei einem Fahrzeug für die Flugzeugbe- und/oder -entladung.

## Claims

1. Lifting device (1) with a lower frame (3), an upper frame (22) for taking up a load, whereby the upper frame (22) has a pair of scissoring elements (5, 5), associated with it, that is born in the lower frame (3) and takes up the upper frame (22), and the two scissoring elements (5, 5) of the scissoring pair are disposed on both sides of the lower (3) and the upper (22) frame and the given scissoring element (5) is formed as a multiply scissoring element, and also with means for lifting and lowering the upper frame (22), whereby a ladder (29, 30, 31), with a first ladder section (29), disposed vertically regardless of the height of lifting, that is supported in the lower frame (3), and a second ladder section (30), disposed vertically regardless of the height of lifting, that is supported in the upper frame (22), and with at least one third ladder section (31), disposed vertically regardless of the height of lifting, that is disposed between the first (29) and second (30) ladder section, is disposed in the area of one scissoring element (5), **characterized in that** the third ladder section (31) is born in the scissoring element (5) adjacent to the ladder (29, 30, 31).

2. Device in accordance with claim 1, **characterized in that** the given scissoring element (5) is in the form of a double scissor.

3. Device in accordance with claims lor 2, **characterized in that** there is a single third ladder section (31).

4. Device in accordance with one of claims 1 to 3, **characterized in that** the third ladder section (31) is held in a support section (32) that, in the area of one end, is supported in the connection bearing (20), of the adjacent scissoring elements (6, 6), that can only move vertically, and, in the area of the other end, is supported in the connection bearing (13), of these adjacent scissoring elements (6, 6), that moves vertically and horizontally.

5. Device in accordance with one of claims 1 to 4, **characterized in that** the given separate scissoring elements (6, 6) are like the multiple scissoring elements.

6. Device in accordance with one of claims 1 to 5, **characterized in that** one of the bearings (20) of the support section (32) of the third ladder section (31) is vertically aligned with the fixed bearing (10, 26) of the lower (3) and upper (22) frames, and the other bearing (13) of the support section (32) of the third ladder section (31) is in vertical alignment with the slack bearing (17, 24) of the lower frame (3) and the upper frame (22).

7. Device in accordance with one of claims 1 to 6, **characterized in that** the third ladder section (31), as seen in a vertical line, is disposed between the first ladder section (29) and the second ladder section (30).

8. Device in accordance with claim 7, **characterized in that** the first ladder section (29) is disposed at a greater separation from the scissoring element (5) associated with the ladder (29, 30, 31) than the second ladder section (30).

9. Device in accordance with one of claims 1 to 8, **characterized in that** the ladder sections (29, 30, 31) do not overlap in the fully lifted position of the upper frame (22).

10. Device in accordance with one of claims 1 to 9, **characterized in that** the lower frame (3) takes up a chassis unit, particularly a steerable, mechanically drivable chassis unit.

11. Device in accordance with one of claims 1 to 10, **characterized in that** the upper frame (22) takes up a platform or a compartment for the uptake of a load.

12. Device in accordance with one or more of claims 1 to 11 in a vehicle for loading and/or unloading aircraft.

## Revendications

1. Dispositif de levage (1) comprenant : un cadre inférieur (3) ; un cadre supérieur (22) pour la réception d'une charge, une paire de pantographes (5, 5) étant attribuée au cadre supérieur (22), ladite paire étant montée dans le cadre inférieur (3) et le cadre supérieur (22) venant s'y disposer, et les deux pantographes (5, 5) de la paire de pantographes venant se disposer de part et d'autre du cadre inférieur (3) et du cadre supérieur (22), et le pantographe respectif (5) étant réalisé à la manière d'un pantographe multiple ; ainsi que des moyens pour soulever et abaisser le cadre supérieur (22), une échelle (29, 30, 31) étant disposée dans la zone d'un pantographe (5) et comprenant une première partie d'échelle (29) disposée à la verticale indépendamment de la hauteur de levage, ladite partie étant montée dans le cadre inférieur (3), et une deuxième partie d'échelle (30) disposée à la verticale indépendamment de la hauteur de levage, ladite partie étant montée dans le cadre supérieur (22), et au moins une troisième partie d'échelle (31) disposée à la verticale indépendamment de la hauteur de levage, ladite partie d'échelle étant disposée entre la première partie d'échelle (29) et la deuxième partie d'échelle (30), **caractérisé en ce que** la troisième partie d'échelle (31) est montée dans le pantographe (5) voisin de l'échelle (29, 30, 31).

2. Dispositif selon la revendication 1, **caractérisé en ce que** le pantographe respectif (5) est réalisé sous la forme d'un double pantographe.

3. Dispositif selon la revendication 1 ou 2, **caractérisé en ce qu'**on prévoit une seule troisième partie d'échelle (31).

4. Dispositif selon l'une quelconque des revendications 1 à 3, **caractérisé en ce que** la troisième partie d'échelle (31) est maintenue dans un élément de support (32) qui, dans la zone d'une de ses extrémités, est monté dans le palier de liaison (20) des pantographes individuels voisins (6, 6), apte effectuer un déplacement exclusivement en direction verticale et, dans la zone de son autre extrémité, dans le palier de liaison (13) de ces pantographes individuels voisins (6, 6), apte à effectuer un déplacement en direction verticale et en direction horizontale.

5. Dispositif selon l'une quelconque des revendications 1 à 4, **caractérisé en ce que** les pantographes individuels respectifs (6, 6) sont identiques au pantographe multiple.

6. Dispositif selon l'une quelconque des revendications 1 à 5, **caractérisé en ce que** le premier palier (20) de l'élément de support (32) de la troisième partie d'échelle (31) est disposé en alignement vertical avec le palier fixe (10, 26) du cadre inférieur (3) et du cadre supérieur (22), et l'autre palier (13) de l'élément de support (32) de la troisième partie d'échelle (31) est disposé en alignement vertical avec le palier libre (17, 24) du cadre inférieur (3) et du cadre supérieur (22).

7. Dispositif selon l'une quelconque des revendications 1 à 6, **caractérisé en ce que** la troisième partie d'échelle (31), vu en alignement vertical, est disposée entre la première partie d'échelle (29) et la deuxième partie d'échelle (30).

8. Dispositif selon la revendication 7, **caractérisé en ce que** la première partie d'échelle (29) est disposée à une plus grande distance du pantographe (5) attribué à l'échelle (29, 30, 31) que la deuxième partie d'échelle (30).

9. Dispositif selon l'une quelconque des revendications 1 à 8, **caractérisé en ce que** les parties d'échelles (29, 30, 31) ne se chevauchent pas dans la position complètement relevée du cadre supérieur (22).

10. Dispositif selon l'une quelconque des revendications 1 à 9, **caractérisé en ce qu'**un mécanisme de commande, en particulier un mécanisme de commande dirigeable, qui peut être entraîné par une machine, vient se disposer sur le cadre inférieur (3).

11. Dispositif selon l'une quelconque des revendications 1 à 10, **caractérisé en ce qu'**une plate-forme ou une cabine pour la réception d'une charge vient se disposer sur le cadre supérieur (22).

12. Utilisation d'un dispositif de levage selon une ou plusieurs des revendications 1 à 11 avec un véhicule pour le chargement et/ou le déchargement d'un aéroplane.
